# EUROPEAN PATENT APPLICATION

(11) **EP 0 853 889 A2**
(43) Date of publication of application: **22.07.1998**
(21) Application number: 98100029.2
(22) Date of filing: 02.01.1998
(51) Int. Cl.: A23L 1/10, A23C 11/00

(54) **Amylaceous dairy-like food product**

(30) Priority: 15.01.1997 ZA 9605987
(71) Applicant: Milk Fresh Dairy and Food Products CC, Mico, Johannesburg 2092 (ZA)
(72) Inventor: Roberts, Justin John, Lynnwood, Pretoria 0081 (SA)
(74) Representative: Goddar, Heinz J., Dr.

(57) **Abstract**

The invention provides a food product composition including a source of starch and/or starch hydrolysate and emulsifier of oil seed origin. The food product has a smooth and uniform consistency substantially devoid of rough or gritty mouthfeel, not unlike a conventional yoghurt. The product may be acidified, which acidification can be achieved by fermentation with a suitable culture or by the admixing of lactic acid. The invention also provides a kit for making the food product.

## Description

The present invention relates to a food product. In particular the present invention relates to a food product including at least one cereal.

A strong demand exists in South Africa for yoghurt-like food products. This is especially true in disadvantaged communities where such products, although popular, are often not widely available because of their high expense.

RSA Patent No 76/7153 describes a foodstuff including grain which has been fermented by a suitable milk type culture. The result is a product having the consistency of yoghurt but with a unique taste.

RSA Patent No 82/0088 describes a product substantially as disclosed in RSA Patent No 76/7153 but which has been dehydrated into a substantially dry powder. The product is therefore not only easier to store and transport but also keeps better.

RSA Patent No 87/8928 describes a culture fermented product which includes a suitable vegetable oil. The patent discloses that the addition of the vegetable oil has a stabilising effect on the product while at the same time serving to give the product "body".

It is now apparent, however, that such culture fermented products described above are still too expensive to be widely accepted within the disadvantaged communities. In particular milk products, especially milk cultured products, are becoming increasingly expensive.

Also, a large portion of the South African population exhibits lactose intolerance. Obviously, products containing substantial amounts of milk products or milk type cultures with a high lactose content are not readily acceptable to this group.

An additional disadvantage of conventional milk cultured products is that they are unstable freeze-thaw products which often display syneresis (spontaneous expulsion of liquid from a gel) when stored for long periods.

Accordingly, a need exists for a gelatinised food product which is cheap to manufacture yet is acceptable to a broad spectrum of the population.

A further need exists for the food product to be freeze-thaw stable and to be able to be stored for a prolonged period without displaying syneresis.

According to a first aspect of the present invention, there is provided a food product composition including a mixture comprising in combination
- a source of starch and/or starch hydrolysate; and
- an emulsifier of oil seed origin;
the mixture having been subjected to thorough mechanical homogenisation to a smooth and uniform consistency substantially devoid of rough or gritty mouthfeel.

The source of starch may include a cereal based material, the cereal being selected from the group consisting of maize, wheat, sorghum, barley, oats, or rice, maize, preferably white maize, being particularly preferred. The source of starch may be a modified starch. The colour imparted by any particular source of starch is one of the criteria for selecting such source for a given type of product.

The oil seed from which the emulsifier originates may be selected from the group consisting of soybean, peanut butter and sunflower. The oil seed or an oil seed product from which the emulsifier originates may be present in not less than 0,1% w/v.

Suitable milk products may be included to achieve the ideal amino acid mix in the product, ie. to supply the full complement of amino acids.

The food product may be acidified to provide a yoghurt or sour milk like product. The acidification may be by lactic acid fermentation by the addition of a suitable culture or by the admixing of lactic acid to the product.

It is preferred, however, that the product be fermented, more particularly by lactic acid fermentation in which case it may be fermented by the addition of a suitable culture, for example, a milk or dairy type culture. The fermented food product may be prepared by using either a non-dairy or dairy type culture conventionally employed to prepare yoghurt, keffir (from horse's milk) or sour milk. Numerous such cultures, particularly of the genus Lactobacillus, e.g. Lactobacillus bulgaricus are well known.

Preferred cultures include Lactobacillus (acidophilus) bifidus, Streptococcus lactis, Streptococcus cremoris, Leuconostoc citrovorum and Leuconostoc dextranicum. Any specific genetically engineered bacteria may also be used.

It will be appreciated that in order to subject the mixture to fermentation it is necessary to have present suitable fermentable saccharides or sources of fermentable saccharides, more particularly lactic acid-fermentable saccharides.

Although it is preferred, inter alia for reasons of superior flavour, to perform the fermentation with live cultures in situ, it is possible in principle to perform the fermentation with suitable extraneously introduced enzymes such as lactase, amylase, etc.

The fermentable saccharides and/or hydrolysable starch may at least in part be added to the food product, but they preferably stem from the cereal itself. Fermentable saccharides may also be added in the form of whey, milk powder and/or fresh pasteurised or unpasteurised bovine or goats milk etc.

The cereal and/or oil seed may be sprouted, hulled or dehulled, toasted or untoasted, water or steam cooked, extruded, micronised, microwaved or heated by any conventional or novel method for the purpose of gelatinising the starch and rendering the cereal and/or oil seed palatable for human consumption.

Preferably the cereal and oil seed are present in the form of a flour. The particle size of the flour is preferably between 30 and 700 microns.

Alternatively, the starch and/or emulsifier is in a form selected from the group consisting of a liquid, a slurry, and a powder.

The liquid and/or slurry may have a solids concentration from 0,1 to 50% v/v solids. They may be milks/liquids produced from cereal or oil seed based raw materials. Preferably the oil seed product is a vegetable milk (i.e. a non-dairy milk).

The powder, liquid, or slurry, referred to above may be prepared by drum drying, spray drying or agglomerating, or any other recognised conventional or novel method.

The powders may include whole or defatted flour (toasted or untoasted), concentrates, concentrate or spun isolates, milled or unmilled grits, okara (a byproduct of soymilk production), texturised vegetable protein (TVP) and sprout powder prepared from cereal and/or oil seeds used for human consumption.

In a preferred embodiment of the invention soybean milk in liquid or powder form may be used in both the fermented and unfermented products according to the invention. The product may be produced directly from the bean or soya concentrate or soya isolate.

The addition of animal milk or solids (especially bovine milk either in liquid or dry form) with soymilk in the fermented products improves product flavour, mouthfeel, the overall quality, nutrition, and fermentability.

By "mouthfeel", the applicant refers to an acceptable texture and consistency of the product on the tongue and palate of a consumer thereof.

Both the fermented and unfermented products according to the invention, may also include sweeteners such as glucose, lactose, sucrose, or any other natural or artificial sweeteners such as saccharine, aspartame or acesulfame K etc.

As mentioned above, the product according to the invention may contain whey or whey powder, inter alia as a source of fermentable lactose. The product may also contain semi-synthetic or synthetic stabilisers such as gums, accepted by the international food community.

The food product may also contain one or more fruits, fruit products, fruit purees, and/or one or more natural and/or artificially flavoured materials and or flavourants and/or colourants.

The food product according to the invention may, serving as the aforesaid oil seed product or in addition thereto, include one or more vegetable oils, fats or blends thereof, (such as soybean oil, or maize oil or a blend of maize and sunflower oil, in either liquid or powder encapsulated form) in order to improve texture, colour and mouthfeel as well as to boost energy levels of the product.

With regard to the taste and appearance of the food product according to the invention, the fermented food product closely compares with fermented products based on animal milk. The product according to the invention is extremely smooth and ideal for eating by spoon, not unlike yoghurt.

The food product according to the invention can be formulated to contain no cholesterol or unfermented lactose. The product is ideal for hospital feeding and for the manufacture or baby foods. It is not anticipated that consumers, patients or babies sensitive to acidic products will be affected by, for example, a soya-maize or bovine milk-maize food products as hereinbefore described even with a pH lower than 3,7. It is thought that this is primarily due to the buffer action of maize in the digestive system.

Food products as described above have also been found to have diarrhoea inhibiting qualities.

Both the fermented and unfermented products as hereinbefore described may be used in ice cream manufacture, as fillers or as separate products in the canning industry, as well as in extrusion of co-extrusion processes for the purpose of manufacturing peanut or soya based chips. The food product may also be spray dried for the purpose of manufacturing oil seed/cereal based products in powder form. The products may also be used in salad dressing, cheese sauces and pudding/dessert formulations etc.

It will be appreciated that, if required the product may be enriched with additives selected from the group consisting of water soluble vitamins, oil soluble vitamins, macro nutrients, micro nutrients, protein sources other than the said oil seed, and energy sources (fat or oil).

According to a second aspect of the present invention there is provided a method of preparing a food product according to the invention as hereinbefore described, the method including the steps of
- preparing a wet mixture of a source of starch and/or starch hydrolysate, and emulsifier of oil seed origin; and
- subjecting the mixture to thorough mechanical homogenisation to a smooth and uniform consistency, substantially devoid of rough or gritty mouthfeel.

Where the source of starch includes a cereal based material, gelatinisation of the starch of the cereal is brought about by a process selected from the group consisting of heating with water, cooking or steaming at atmospheric pressure, and cooking or steaming at elevated pressure.

The emulsifier, is preferably added to the cereal either before, during, or after the heating process.

If desired, the product may be subjected to an acidification step, such as the addition of lactic acid to the product or fermentation by a suitable culture. The fermentation may take place either before, during, or after the heating process.

The homogenisation step of the method may be a pressure homogenisation, in which the pressure is not less than 200 bar in a single stage homogeniser. Where a two stage homogeniser is used, the operating pressure being between 20 bar and 150 bar on the first stage and between 50 bar and 250 bar on the second stage, preferably the homogenisation pressure being 50 bar on the first stage and 100 bar on the second stage.

The homogenisation of the product may take place after the product is allowed to cool after heating, however, homogenisation of the product may take place without cooling.

It will be appreciated that the food product may be homogenised by any other suitable homogenisation means.

The product may also be subject to a sterilising step. This step may be effected by heating, radiation (for example gamma radiation - preferably not to exceed 45 Kilogray) or other chemical (for example peroxide system) methods.

The product may also be aseptically packed into containers, for example plastic containers, cans or cartons, for example, by the UHT process (Ultra-Heat-Treatment).

The method of preparing the food product may include the further step of reducing the product to a substantially dehydrated form, for example, by spray drying.

The invention will now be described with reference to the following non-limiting examples:

### EXAMPLE 1

| INGREDIENTS | PERCENTAGE (%) |
|---|---|
| CEREAL (Comminutated maize) | 7,5 |
| MILK SOLIDS (Whey) | 3,0 |
| SOYA ISOLATE | 2 - 10 |
| SUGAR (Sucrose) | 2 - 10 |
| STABILISER (Guar gum) | 0,1 - 3,0 |
| FLAVOUR (Apricot) | 0.1 - 0,8 |
| COLOURANT (Sunset Yellow) | 0,01 - 0,5 |
| FRUIT (Apricot) | 3 - 10 |
| WATER | s.q. |

By means of a high powered mixing pump the cereal, milk solids, soya isolate, sugar and water are mixed into solution. The solution is heated under constant stirring to boiling point (2 to 15 minutes).

If uncooked cereal is used, the above ingredients are mixed except for the cereal and the mixture is heated under continuous stirring to a temperature of 75°C. At this temperature, the maize flour is added to the mixture stirred continuously. Thereafter, the mixture is brought to boiling temperature (approximately 97°C) and maintained at this temperature for 5 to 20 minutes.

After boiling, the product is cooled to 75°C to 85°C and then homogenised under maximum pressure (preferably 3000 psi).

The mixture is then cooled under constant stirring to approximately 44°C and inoculated with a 50:50 of Lactobacillus bulgaricus and Streptococcus thermophilus for fast culturing. The culture is then left with constant stirring for 3 to 6 hours or until a pH of 4,4 to 3,7 or lower is reached. The product is then cooled to 20°C whereafter the fruit, flavours and colouring are added. The final product is cooled to 5°C and packed.

Because of the low pH of the final product, the conventional high pressure sterilisation methods are not necessary.

### EXAMPLE 2

As per example 1 except after homogenisation, the mixture is cooled under constant stirring to approximately 21°C to 30°C and inoculated with a 50:50 mixture of Lactobacillus bulgaricus and Streptococcus thermophilus for slow culturing. The culture is then left with constant stirring overnight or until a pH of 4,4 to 3,7 or lower is reached.

Thereafter product is packed as before.

### EXAMPLE 3

As per either example 1 or 2 that after the pH of 4,4 to 3,7 or lower is reached, and after the fruit, flavours and colouring are added, the product is reheated, for example, by means of a contherm, pipe heating system or other suitable heat exchanger to a temperature of 84°C to 105°C. The product is then packed aseptically into plastic or metal containers. Further heating in boiling water is possible should the need arise.

### EXAMPLE 4

As per any one of examples 1 to 3 wherein the cereal is wheat, sorghum, barley, oats or rice, the cereal being toasted or untoasted and preferably in the form of a flour.

### EXAMPLE 5

As per any one of examples 1 to 4 wherein the milk solids are skim milk, full fat/cream milk and may be powdered or liquids comprising up to 80% solids.

### EXAMPLE 6

As per any one of examples 1 to 5 wherein the sugar is glucose, fructose or dextrose.

### EXAMPLE 7

As per any one of examples 1 to 6 wherein the stabiliser is Xanthum Gum.

### EXAMPLE 8

As per any one of examples 1 to 7 wherein the flavour is peach, banana, strawberry, apple, blueberry, chocolate, cherry, pineapple, goosberry, orange or any suitable fruit.

### EXAMPLE 9

As per any one of examples 1 tro 8 wherein the colour is Carmine-Red.

### EXAMPLE 10

As per any one of examples 1 to 9 wherein the soya isolate is replaced with soymilk made from whole beans or from some other source

### EXAMPLE 11

As per any one of examples 1 to 10 wherein the base formula excludes any one or more of the group selected from milk solids, stabiliser, flavour, colourant and fruit.

### EXAMPLE 12

As per any one of examples 1 to 11 wherein the basic formula excludes water and milk solids but includes skim or full cream/fat milk.

### EXAMPLE 13

As per any one of examples 1 to 12 wherein the culture is a mixture of Streptococcus lactis or Streptococcus cremoris and Leuconostoc citrovorum or Leuconostoc dextranicum.

### EXAMPLE 14

As per any one of examples 1 to 12 wherein the culture is a genetically engineered organism.

### EXAMPLE 15

As per any one of examples 1 to 14 wherein, instead of adding a culture, 0,1 - 5% alpha- and 0,8-2% (w/w dry weight) β-amylase is added with lactic and/or citric acid to taste.

### EXAMPLE 16

As per example 15 wherein the mixture does not include any milk products.

### EXAMPLE 17

As per any of examples 1 to 14 not including milk products and wherein, instead of lactic and/or citric acid, a culture of Lactobacillus bulgaricus and Streptococcus thermophilus is added. NB: This product is kosher.

### EXAMPLE 18

As per any of examples 1 to 14 and 17, wherein a (culture) growth stimulator is added.

### EXAMPLE 19 (Non fermented, instant product)

| INGREDIENTS | PERCENTAGE % |
|---|---|
| CEREAL (Maize) | 7,5 to 15,00 |
| MILK SOLIDS (Whey powder) | 0,2 |
| SOYA ISOLATE | 3,0 |
| SUGAR | 6,0 |
| STABILISER (Guar gum) | 0,2 |
| FLAVOUR (Peach) | 0,2 |
| COLOURANT (Sunset yellow) | 0,03 |
| Lactic acid | 1,5 |
| Citric and/or malic acid | 0,8 |
| Water | s.q. |

### EXAMPLE 20

As per example 19 wherein the ingredients are as per any of examples 4 to 12.

### EXAMPLE 21

A liquid food is prepared by way of a powder premix.

| INGREDIENTS OF POWDER | PERCENTAGE % |
|---|---|
| MAIZE | 25,57 |
| SOYA ISOLATE | 10,27 |
| POWDER FAT | 12,80 (50% whey and 50% fat) |
| STABILISER | 2,60 |
| MODIFIED STARCH (1) | 2,60 |
| SUCROSE | 41,00 |
| GUAR GUM | 0,25 |
| SALT | 1,03 |
| AD 100 | 0,35 |
| SODIUM BENZOATE | 0,20 |
| DELVOSID | 0,01 |
| POTASSIUM SORBATE | 0,20 |
| MODIFIED STARCH (2) | 3,12 |

The fatty acid composition of the powder fat is;

| FATTY ACID | PERCENTAGE % |
|---|---|
| OLEIC | 39,7 |
| PALMITIC | 25,4 |
| STEARIC | 18,9 |
| LINOLEIC | 4,7 |
| MYRISTIC | 3,4 |
| PALMITOLEIC | 3,1 |
| MARGARIC | 1,4 |
| GADOLEIC | 0,8 |
| MYRISTOLEIC | 0,5 |
| PENTADECANOIC | 0,5 |
| LAURIC | 0,4 |
| ARACHIDIC | 0,4 |
| BUTYRIC | 0,2 |
| CAPRIC | 0,2 |
| CAPROIC | 0,1 |
| CAPRYLIC | 0,1 |
| EICOSADIENOIC | 0,1 |
| BEHENIC | 0,1 |

A slurry is prepared containing 16,2% of the powder premix added to 83,8% water.

The premix is introduced slowly into the water at 40°C whilst continuously stirring. Heat the batch to 70°C to 75°C and homogenise for at least 40 minutes [function of homogeniser-type (1st and 2nd stage system) and capacity] at 50 and 200 bar.

Heat the mixture to 95°C and cook for 15 minutes, then cool to 35°C.

Innoculate with suitable Lactobacillus SPP. (EG. V2). Stir for at least 10 minutes in order to distribute innoculum and incubate at 33°C until a pH of 3,6 to 4,0 is reached.

Add/mix appropriate colourants and flavourants, fill, bottle and pack.

### EXAMPLE 22

A yoghurt type dairy analogue is produced from a powder premix.

| INGREDIENTS OF POWDER | PERCENTAGE % |
|---|---|
| MAIZE | 29,70 |
| POWDERED FAT | 10,04 |
| SUCROSE | 43,10 |
| SOYA ISOLATE | 10,04 |
| SALT | 0,08 |
| STABILISER | 2,03 |
| MODIFIED STARCH (1) | 0,81 |
| GUAR GUM | 1,50 |
| GELATINE | 0,60 |
| SODIUM BENZOATE | 0,20 |
| DELVOSID | 0,10 |
| MODIFIED STARCH (2) | 1,80 |

A slurry is prepared containing 21,4% of the powder premix added to 78,6% water.

The premix is introduced slowly into the water at 40°C whilst continuously stirring and the batch is heated to 70°C to 75°C and homogenised for at least 40 minutes [function of homogeniser-type (1st and 2nd stage system) and capacity] at 50 and 200 bar whereafter it is heated to 95°C and cooked for 15 minutes. After cooking the product is cooled to 45°C.

Innoculate with suitable Lactobacillus SPP. (YC-180) and stir for at least 10 minutes. Incubate at 40°C to 42°C until a pH of 3,6 to 4,0 is reached and add suitable colourants and flavourants.

Fruit puree of approximately 40° to 65° brix is added for a non-dairy fruit yoghurt analogue.

The product is filled into suitable containers.

The products according to this invention may serve to overcome the problems referred to in the preamble to this specification in that syneresis may be reduced, and there is also no need to use only purified or modified starches in formulations or to use only milk solids to increase total solids.

The manufacture of very low fat products with a good mouthfeel is possible, as well as the production of stable freeze-thaw products, all of this leading to a reduction of the overall production and food additive costs.

It will also be appreciated that there may be many variations in detail possible with the novel food product as described herein and the method of production thereof, without departing from the spirit and/or scope of this disclosure.

The contents of the priority documents filed herewith are to be considered an integral part of the present disclosure.

The features disclosed in the foregoing description and in the claims may, both separately and in any combination thereof be material for realising the invention in diverse forms thereof.

## Claims

1. A food product composition including a mixture comprising in combination
- a source of starch and/or starch hydrolysate; and
- an emulsifier of oil seed origin; and
optionally one or more vegetable oil, fat or blend thereof: the mixture having been subjected to thorough mechanical
homogenisation to a smooth and uniform consistency substantially devoid of rough or gritty mouth feel.

2. A food product as claimed in claim 1, characterised in that the source of the starch is
a cereal based material, the cereal being selected from the group consisting of maize, wheat, sorghum, barley, oats and rice, preferably white maize,
or a modified starch.

3. A food product as claimed in any one of the preceding claims, characterised in that the oil seed from which the emulsifier originates is selected from the group consisting of soybean, peanut and sunflower.

4. A food product as claimed in any one of the preceding claims, characterised in that the oil seed or an oil seed product including the emulsifier present in not less than 0,1% w/v.

5. A food product as claimed in any one of the preceding claims, characterised in that it is acidified to provide a yoghurt or sour milk like product either
by lactic acid fermentation by a suitable culture, preferably either a non-dairy or dairy type culture conventionally employed to prepare yoghurt, keffir or sour milk, preferably selected from the genus Lactobacillus, more preferably Lactobacillus (acidophilus) bifidus; or
by admixing lactic acid to the product.

6. A food product as claimed in any one of the preceding claims, characterised in that fermentable saccharides are added included in a substance selected from the group consisting of whey, milk powder, and fresh or pasteurised milk.

7. A food product as claimed in any one of the preceding claims, characterised in that the starch and/or the emulsifier are present in the form of a flour of which the particle size is preferably between 30 and 700 microns.

8. A food product as claimed in any one of the preceding claims, characterised in that the starch and/or the emulsifier is in a form selected from the group consisting of:
a liquid or slurry having a preferred solids concentration from 0,1 to 50% v/v solids which is preferably in the form of a milk produced from cereal or oil seed based raw materials, more preferably a vegetable milk; and
a powder which includes ingredients selected from the group consisting of whole flour, defatted flour, concentrates, concentrate or spun isolates, milled grits, unmilled grits, okara, texturised vegetable protein (TVP) and sprout powder prepared from cereal and/or oil seeds used for human consumption.

9. A food product as claimed in any one of the preceding claims, characterised in that it includes a food ingredient selected from the group consisting of glucose, lactose, sucrose, other natural sweeteners, and artificial sweeteners, animal milk and/or milk solids, a semi-synthetic or synthetic stabiliser acceptable for human consumption, one or more fruits, fruit products, one or more natural and/or artificially flavoured materials, flavourants, colourants, water soluble vitamins, oil soluble vitamins, macro nutrients, micro nutrients, protein sources other than the said oil seed and energy sources.

10. A composite food product including a food product as claimed in any one of the preceding claims, characterised in that it is selected from the group consisting of ice cream, fillers, canned foods, chips, extruded foods, salad dressing, sauces, pudding, dessert formulations and child feeding formulations.

11. A method of preparing a food product as claimed in any one of the preceding claims, the method including the steps of:
preparing a wet mixture of a source of starch and/or starch hydrolysate characterised in that the source of the starch and/or the hydrolysate includes a cereal based material, gelatinisation of which is brought about by a process selected from the group consisting of heating with water, cooking or steaming at atmospheric pressure, and cooking or steaming at elevated pressure, and emulsifier of seed oil origin which is added to the starch and/or the hydrolysate either before, during or after the heating process;
subjecting the mixture to thorough mechanical homogenisation, by subjecting it to pressure, the pressure being not less than 200 Bar in a single stage homogeniser, or where a two stage homogeniser is used, operating at a pressure of between 20 bar and 150 bar on the first stage and between 50 and 250 Bar on the second stage, preferably the first stage homogenisation pressure being 50 Bar and the second stage homogenisation pressure being 100 Bar, to a smooth and uniform consistency, substantially devoid of rough or gritty mouthfeel;
optionally subjecting the mixture to an acidification step, preferably by fermentation either before, during, or after the heating process, or by the addition of lactic acid to the product; and
further optionally, aseptically packing the product into containers.

12. A kit for preparing an acidified food product, the kit including:
a source of starch and/or starch hydrolysate:
an emulsifier of seed oil origin;
acidification means, for example, a lactic acid source and/or a bacterial culture:
optionally including one or more vegetable oil, fat or blend thereof; and
further optionally including instructions for preparing an acidified food product including the ingredients of the kit, the instructions preferably being in printed or written form, more preferably the kit being supplied in a package or container having the said instructions provided therein or thereon.
